# EUROPEAN PATENT SPECIFICATION

(11) **EP 3 062 626 B1**
(45) Date of publication and mention of the grant of the patent: **22.02.2017**
(21) Application number: 14744598.5
(22) Date of filing: 30.07.2014
(51) Int. Cl.: A23D 7/06, A23C 13/00, A23L 3/36, A23L 27/60, A23C 13/16, A23L 3/3571, A23P 20/10, A23L 29/20, A23L 31/00, A23L 23/00, A23P 20/20

(54) **FOOD COMPOSITION WITH A LAYER COMPRISING FUNGUS**
NAHRUNGSMITTELZUSAMMENSETZUNG MIT EINER SCHICHT MIT PILZEN
COMPOSITION ALIMENTAIRE POURVU D'UNE COUCHE COMPRENANT UN CHAMPIGNON

(30) Priority: 19.08.2013 EP 13180874
(43) Date of publication of application: 07.09.2016
(73) Proprietor: Unilever N.V., 3013 AL Rotterdam (NL); Unilever PLC, London, Greater London EC4Y 0DY (GB)
(72) Inventor: CHAPMAN, John William, NL-3133 AT Vlaardingen (NL); DANTUMA, Anouk, NL-2522 JA Den Haag (NL); HEIJNE, Katrina Gesina, Englewood Cliffs, New Jersey 07632 (US); VAN DE POLL, Jonkheer Theodoor Hendrik, NL-3133 AT Vlaardingen (NL); POPP, Alois Konrad, NL-3133 AT Vlaardingen (NL)
(74) Representative: Fijnvandraat, Arnoldus
(86) International application number: PCT/EP2014/066411
(87) International publication number: WO 2015/024751

(56) References cited:
- FR-A1- 2 759 253
- NL-C- 1 037 369
- US-A1- 2007 141 211

## Description

The present invention relates to a food composition comprising a layer comprising fungus. It further relates to a method to provide the same. The invention further relates to the use of a layer comprising fungus and a biopolymer as a packaging material on a food composition.

### Background of the invention

Food compositions, either ready-to-eat compositions, or concentrated food compositions, are normally sold in a packaged state. Packaging serves several functions, for example it can protect the food products from one or more external influences like microbial spoilage, light, water, or drying out. It can further contribute to protect the physical integrity of the food product, either by protecting it from physical damage from outside or by preventing deformation due to gravity. In food industry, it is not uncommon that different ways of protection are dealt with by different packaging materials or layers within a single packaging material. A packaging conventionally comprises plastic material, e.g. film or foil, which covers the surface of the food composition. In this way, the food composition is protected from several influences from the outside world, like for example micro-organisms or light, which might negatively influence the quality of the food composition.

A disadvantage of many conventional packaging materials is their poor environmental sustainability. For example, laminated plastic films may take a long time before disappearing from the environment. Another disadvantage of conventional packaging material is that it protects the food product only from influences from outside, but not from influences from inside the food composition, for example microbes present in the food product. Furthermore, many conventional types of packaging are not elastic and therefore are not able to react to dimensional changes in the product e.g. due to temperature abuses like freezing which might result in rupture of the packaging.

Concentrated food compositions, also referred to in the field as "concentrates", are of particular interest, as in many households in many cultures they are used on a daily basis as a basic ingredient in the cooking process or to season a dish. They normally have a high level of taste enhancing ingredients like for example mono-sodium glutamate or salt.

Food compositions, like dressings, sauces or seasonings, especially concentrated food compositions, like for example concentrates for seasoning, for a dressing, for soups or for sauces, are often individually packaged for single use only, also known as unit-dosing. Their packaging material can for example comprise a plastic tub, sachet or stick pack which may or may not include plastic or metal film. The individually packaged food compositions are normally packaged in a secondary packaging, for example a cardboard box, with about 1 to 24 products in the box. It can be conceived that high amounts of packaging material end up in the environment on a daily basis, especially if the food composition is a concentrated food composition.

Accordingly, there is a need for a packaged food composition, wherein the packaging comprises an entirely different packaging material which is perceived as environmentally more sustainable than conventional packaging materials which are for example based on plastic. The packaging needs to be easily removable from the food composition. The packaging material is preferably flexible, and sufficiently strong to be handled to allow wrapping without breaking and preferably allows repacking of a food composition after opening. The packaging is preferably compatible with concentrated food compositions comprising a relatively high level of salt or preservatives.

### Summary of the invention

Surprisingly, this aim was met by a food composition, wherein a layer is present at the surface of the food composition, wherein the layer comprises fungus and a water-soluble biopolymer and wherein preferably the food composition is not cheese.

In a further respect, the invention relates to a process for preparing a food composition according to the invention, the process comprising the steps of:
A. Providing a food composition,
B. Applying a layer onto the food composition resulting from step A), which layer comprises:
   - a water-soluble biopolymer and
   - fungus and/or fungus spores,
C. Incubating the layer before or after applying it to the food composition.

In a further aspect, the invention relates to the use of a food composition according to the invention for preparing a bouillon, a soup, a sauce, a gravy or a seasoned dish.

In a further aspect, the invention relates to the use of a layer comprising fungus and a biopolymer as a packaging material for a food product, wherein the food product is not cheese.

### Detailed description of the invention

The present invention relates to a food composition wherein a layer is present at the surface of the food composition, the layer comprising biopolymer and fungus.

Preferably, the surface of the food composition is at least partly covered by the layer. It can be preferred that the food composition is totally covered by the layer. The fungus in the layer normally and preferably covers the outside of the layer (the side not facing the food composition), preferably homogenously. In this manner, the layer comprising biopolymer and fungus is normally present as a layer of biopolymer on which homogenously a layer of fungus grows or which is homogenously covered with a layer of fungus. For clarity, throughout this description, "food composition" does not include the layer comprising biopolymer and fungus. It might be preferred that only one surface, preferably the upper surface of the food composition is covered by the layer comprising biopolymer and fungus. 'Covered' is preferably understood as being covered homogenously. This can be imagined for example, when the food product is present in a tub or a cup and the surface, facing the outside world, e.g. the top surface, is covered with a layer comprising biopolymer and fungus. In the latter situation one of the advantages of the present invention can be that a cover lid is not present to close the tub or cup, in this way reducing unrecyclable waste. Preferably, at least 50 wt%, more preferably at least 75 wt%, even more preferably at least 90 wt%, most preferably at least 95 wt% of the fungus present in and on the food composition and the layer together is present in and on top of the layer. A food composition may be preferred wherein the layer is located around the food composition. Preferably, the layer covers the entire surface of the food composition. The layer comprising biopolymer and fungus forms normally, and preferably, the outside of the combination of the food composition and the layer. The layer is preferably not covered by another layer of material which is attached to the layer. As the skilled person will understand, the food composition comprising the layer can be packaged in a secondary packaging, such as a box. It is not desired however, that a layer of fat, or wax, or biopolymer is present on top of the layer comprising fungus. Such another layer of material might, especially if impermeable to oxygen, affect or prevent growth of the fungus, or might not be preferred as the appearance of another layer is not desired. Preferably, the layer comprising fungus is in contact with air, or with gas, for example in the head space of a packaging or from the outside world.

The food composition of the present invention preferably is not cheese.

### Biopolymer

It was found that the layer serving as a substrate for the fungus should comprise a biopolymer. The texture of the layer is preferably a paste or a viscous liquid at 20 °C. These textures provide good removability of the layer from the food composition, in contrast for example to the texture of a solid or rigid gel, which might become stuck to several food compositions, e.g. food compositions in the form of a gel. This allows efficiently applying the layer on the food composition, for example without the need of additional heating devices. Preferably, the layer is a non- Newtonian liquid. It might be preferred that the biopolymer substrate can be easily separated from the fungus after complete growth of the fungus, and it might be preferred that the biopolymer substrate can be easily separated from the food product, in both cases without the use of mechanical devices, as e.g. used for cutting. Therefore, it is not preferred that the biopolymer substrate has the texture of a rubbery or brittle gel. The use of biopolymer in the layer appeared to limit growth of the fungus into the food composition, especially if the food composition is a preserved food composition (e.g. by 10-40% salt on water, the use of a preservative or a pH of lower than 4 or a combination thereof). This renders the layer easily removable form the food composition.

Preferably, the biopolymer is water-soluble. Therefore, it may be preferred if the biopolymer is not collagen or does not comprise collagen. Preferably, the biopolymer is not consumed by the fungus during its growth as this weakens the substrate. It may be preferred if the biopolymer does not comprise protein, for example it can be preferred that the layer is free from gelatin. Protein can be added in the layer as part of the nutrients for the fungus. The amount of protein in the layer, if present, is preferably less than 20 %, preferably less than 10 %, and preferably more than 0.25 %, based on the weight of the layer. It is preferred that the layer does not comprise a starch, amylopectin or amylose. A biopolymer system comprising polysaccharides, preferably comprising more than 50%, more preferably more than 80% of polysaccharides, most preferably consisting of polysaccharides is advantageous as it is not consumed by the fungus or at least to a lower extent than observed with starch. A water-soluble biopolymer is advantageous as it can be easily dispersed and be diluted when the food product with the layer attached to it is added to a dish during the preparation or cooking process of the dish. Collagen is not desired as the biopolymer in the present invention, as it is not soluble in water. Preferably, the layer comprises a biopolymer selected from the group of polysaccharides and fibers. More preferably, the layer comprises a biopolymer, more preferably is a biopolymer selected from the group consisting of xanthan gum, galactomannan, glucomannan, carrageenan, pectin, alginate, agar, fibers of fruit or vegetable origin, and mixtures thereof. They are preferably each individually or as a mixture present in an amount of more than 50 wt%, preferably more than 80wt%, and preferably less than 100%, preferably less than 95wt%, based on the total dry weight of biopolymers in the layer. Galactomannans are for example locust bean gum, tara gum, guar gum and cassia gum. Glucomannan is konjac mannan. Although it might be possible to find a combination of these biopolymers which forms a rubbery or brittle gel, as is known to the person skilled in the art, for the present invention such a gel is not desired. It is in the skill of the artisan to choose a biopolymer, or, if desired, a combination of biopolymers and processing conditions which do not result in rubbery or brittle gel under the circumstances of the invention, but a paste, weak gel (i.e. not shape stable at 20 °C) or viscous liquid. Preferably, the layer comprises a biopolymer selected from the group consisting of xanthan gum, galactomannans and pectin. These biopolymers show a desired texture even in the presence of 1 to 5 wt% of salt (based on the total water content of the layer). Most preferably, the biopolymer comprises xanthan gum, which showed optimal results in the context of the present invention. Preferably, the biopolymer is xanthan gum.

The amount of biopolymer in the layer serving as substrate for the fungus can vary, for example depending on the type of biopolymer and the desired rigidity of the layer and the other components in the layer that might influence the texture of the layer. It is preferred that the total amount of biopolymer in the layer is from 0.05 to 10 wt%, preferably of from 0.1 to 8 wt%, most preferably of from 0.5 to 5 wt%, based on the weight of the total water content of the layer. The amount wherein a single biopolymer, or a preferred group of biopolymers, such as mentioned in the previous paragraph can be present, is from 0.05 to 8 wt%, preferably of from 0.1 to 6 wt%, most preferably of from 0.3 to 4 wt%, based on the weight of the total water content of the layer. For example, xanthan gum can be present in an amount of from 0.1 to 8 wt%, preferably 0.3 to 6 wt%, more preferably of from 0.5 to 4 wt%, based on the weight of the total water content of the layer. A mixture of biopolymer selected from xanthan gum, pectin, and alginate can be present in an amount of from 0.1 to 8 wt%, preferably 0.3 to 6 wt%, more preferably of from 0.5 to 4 wt%, based on the weight of the total water content of the layer. In the present invention, wt% on weight of total water content is calculated as (weight of biopolymer) / (weight of biopolymer + weight of total water content in the layer).

### Water

The layer suitably comprises water. The layer is preferably a water-continuous layer. Water is preferably present in a total amount of from 30 to 99 wt%, preferably of from 50 to 97 wt%, based on the weight of the layer. Total amount of water in the layer includes water present in any ingredients in the layer, like for example in vegetable particles which might comprise water.

The water activity (Aw) of the layer is preferably of between 0.99 and 0.8, preferably of between 0.95 and 0.85. This Aw provides optimal conditions to allow the fungus to grow.

### Fungus

According to the present invention, the layer that forms a packaging material around the food composition comprises fungus. The presence of a fungus during preparation of a food product is known. Fungus is traditionally present on some specific food products, like some specific cheeses or fermented dry sausages. The reason for this is that the fungus provides flavoring and excretes substances, e.g. enzymes that interact with the sausage or cheese material and influence the ripening of the sausage or the cheese. In case of the cheese, enzymes are excreted that modify the texture, smell and flavour of the cheese, to obtain the soft cheese texture, for example known from camembert and brie. In these traditional products, a solution of fungus spores may be sprayed on the rind of the cheese or on the sausage casing. See for example Economic Botany January-March, Volume 7 (1), pp. 27-42.

EP0959688 describes the presence of a layer of gellan between cheese and the ripening flora (fungus). The ripening flora can be removed, after the ripening of the cheese is considered finished.

Gerber et al. (PNAS, January 3, 2012; vol. 109; No.1) describes the incorporation of microorganisms into polymer layers to provide a self-cleaning surface. A living layer is disclosed comprising *Penicillium roqueforti* and agar, which layer is placed on a supporting PVC (polyvinyl chloride) film. The living layer is covered by a porous polycarbonate membrane. In this way a "self-cleaning" surface can be created. No reference is made by Gerber et al. to the use as an environmental sustainable packaging material for food products.

In the present invention, it was surprisingly realized by the applicant that a layer comprising a fungus, which fungus is traditionally sprayed on cheese and sausage casing to provide taste and to influence the texture of these products, could be advantageously used in an environmentally sustainable packaging material, when combined with a water-soluble biopolymer layer, e.g. hydrocolloid layer, on food products which do not traditionally comprise a layer of fungus. Such food products are for example salad dressings, sauces, seasoning, concentrates for dressings, concentrates for bouillon, concentrates for seasoning, concentrates for sauces, concentrates for soups, or margarine spreads. The use of a layer comprising fungus and a biopolymer as a packaging material on a food product, wherein the food product is not cheese is a counter-intuitive concept which, to the knowledge of the applicant, has not been explored before. This concept may provide, at least partly, a sustainable alternative for conventional packaging materials used in food products, like plastic tubs, seals, stick packs, sachets or wrapper materials. The material contributes to the prevention of fat staining on further packaging materials, like cardboard box, it is flexible and contributes to the physical stability of the food product. It also offers the possibility to protect the product against microbial spoilage, to such a level similar to that observed for an aluminized seal. Additionally, it not only blocks spoilage organisms from the outside, but allows the design of packaging which actively reduces the microbiological content present inside of the food composition. It might be easily removed before consumption of the food product without damaging the food product, similar to a plastic foil. However, it might also optionally be partially or completely consumed with the food product. In addition, the packaging material might be dispersed during preparation of a dish to which the packaged food composition is added

The fungus preferably comprises mould. In the present invention, fungus preferably comprises one or more species of fungus, preferably is a species of fungus which belong to a phylum or phyla selected from the group consisting of Ascomycetes, Deuteromycetes, Zygomycetes. Preferably, the fungus comprises one or more species of fungus, preferably is a species of fungus which belongs to a genus or genera selected from the group consisting of *Monascus, Geotrichum, Neurospora, Aspergillus, Penicillium, Actinomucor, Amylomyces, Mucor, Rhizopus, Ustilago.* More preferably, the fungus comprises one or more species of fungus, preferably is a species of fungus, which belongs to a genus or genera selected from the group consisting of *Penicillium, Aspergillus and Rhizopus.* Preferably the fungus comprises one or more species, preferably is a species selected from the group consisting of *M. pilosus, M. purpureus, M. ruber, G. candidum, N. sitophila, N. intermedia, A. candidus, A. glaucus, A. melleus, A. niger, A. oryzae, A. repens, A. sojae, P. camemberti, P. candidum, P. glaucum, P. roqueforti, A. taiwanensis, A. elegans var. meitauzae, A. rouxii, M. circinelloides, M. indicus, M. rouxii, R. microspores, R. oligosporus, R. oryzae, U. maydis.* Preferably, the fungus comprises one or more species, preferably is a species selected from the group consisting of *P. camemberti, P. roqueforti, G. candidum A. oryzae, A. candidum, A. sojae, and M. purpureus.* More preferably, the fungus comprises *P. camemberti,* even more preferably the fungus is *P.camemberti.*

On the final food product, after fungus growth, the layer preferably comprises fungus or fungal spores in a total amount of from 30 to 100 wt%, preferably in an amount of from 30 to 90 wt%, based on the weight of the layer. The fungus is preferably present homogenously over the biopolymer of the layer. The layer preferably does not show a speckled pattern of individual fungal colonies. When more than one type of fungus is present, preferably the types of fungus are homogenously distributed over the layer.

### Nutrients

As known to the person skilled in the art, to allow optimal growth and maintenance of the fungus and/or fungal spores in and/or on the layer, the layer preferably comprises sources of amino acids and sources of sugar which are consumed by the fungus.

Preferably, the layer comprises sources of sugar selected from the group consisting of glucose, lactose, sucrose, fructose, starch, amylopectin amylase and mixtures thereof. Preferably, the layer comprises proteins, peptides or mixtures thereof. Most preferably, sugars are provided by the use of glucose, and amino acids by the use of peptone and yeast extract. Consequentially, the layer preferably comprises one or more, preferably all, of glucose, peptone and yeast extract.

Glucose is preferably present in the layer in an amount of from 0.5 to 30 wt%, preferably of from 1 to 10 wt%. Peptone is preferably present in the layer in an amount of from 0.25 to 20 wt%. Alternatively to or in addition to peptone, yeast extract is preferably present in an amount from 0.25 to 20 wt%, preferably of from 0.5 to 10 wt%. (percentages based on the weight of the layer). The concentration of NaCl in the layer is preferably lower than 10 wt%, based on the weight of the water content of the layer, to allow optimal growth of the fungus. The concentration of NaCl in the layer is preferably of between 2 and 10 wt%, more preferably of between 3 and 7 wt%, based on the weight of the water content of the layer. These NaCl levels do not hinder or limit the growth of the fungal species desired in the present invention, like for example *P*. *camemberti* or *A*. *oryzae,* and appeared to limit growth of non-desired fungi and bacteria.

### Fat

Preferably, fat is present between the layer (comprising fungus and biopolymer) and the food composition. It was surprisingly observed that in the presence of a layer of fat, or comprising fat, the growth of the fungus was better. This is a significant advantage. This advantage was in particular observed when the food composition was a preserved food composition, like an acid-preserved or a salt-preserved food composition. Without willing to be bound to theory, it appeared that a layer of fat could limit a possible influence from any ingredients present in the food composition on the growth of the fungus. Furthermore, the fungus, or materials needed for growth of the fungus are not always desired to contact the food composition. It can be preferred, that in food compositions containing starch, a layer of fat is present.

Additionally, the fat layer improves the moisture barrier properties. Further, the presence of fat between the layer and the food composition surprisingly helped to remove the layer comprising fungus and biopolymer more easily from the food composition. In addition, the presence of a fat layer greatly improved the possibility to package products which are not shape stable at room temperature, for example it helped to package products liquid at room temperature.

A food composition can be preferred for example, wherein a layer is present at the surface of the food composition, wherein the layer comprises fungus and a biopolymer and wherein fat is present between the food composition and the layer. It is preferred that the fat is distributed on the food composition covering one or more, preferably all, surfaces of the food composition, preferably covering the surfaces covered by the layer comprising biopolymer and fungus. Preferably the fat present in a layer is of thickness between 0.1 and 5 mm, more preferably of between 1 and 2.5 mm.. It might be preferred that the surface fat or part of it is consumed together with the food composition. The fat is compatible with a food product. The fat preferably comprises fat with a melting point of higher than 15°C, preferably of higher than 20°C, and a melting point of lower than 80°C, preferably lower than 50°C. Preferably, the fat does not comprise wax. The fat preferably is a fat or fat mixture with a melting point of higher than 20°C, more preferably of higher than 25°C, preferably of higher than 35°C, and preferably with a melting point of lower than 80°C, preferably lower than 50°C. This results in the optimum shape stability of the product. The fat preferably comprises or is a fat selected from the group consisting of vegetable fat, beef fat, pork fat, chicken fat, dairy fat and mixtures thereof, preferably with a melting point of higher than 25°C, preferably higher than 35°C, and preferably lower than 50°C. The fat preferably comprises or is vegetable fat or chicken fat, preferably with a melting point of higher than 25°C, preferably higher than 35°C and preferably lower than 50°C. Due to the undesired mouth feel, taste and smell, as well as due to their negative environmental impact, petroleum- based synthetic waxes like paraffin are not preferred and are preferably absent from the fat.

In particular, a food composition can be preferred for example, wherein the food composition has an Aw of lower than 0.95, preferably lower than 0.85 and preferably higher than 0.3. Alternatively, or in combination with these preferred Aw, the food composition has preferably a pH of lower than 3.5, preferably of between 3.4 and 2.5, wherein fat is present between the food composition and the layer. It may be preferred that fat is present between the food composition and the layer comprising biopolymer and fungus, wherein the food composition has a pH of lower than 4, or has a salt content of between 10 and 40 wt% based on the weight of the water content of the food composition or both. Also, fat may be preferably present in case the food composition comprises a preservative, especially a preservative is from a type and in a concentration that it affects the growth or condition of the fungus.

### Food composition

The food composition can be any food composition which is compatible with a layer comprising biopolymer according to the invention. However, it is desired that the food composition provides sufficient texture to carry a layer on at least one surface of the food composition. The food composition preferably is a water-continuous gel or paste, which is preferably shape-stable at 20°C.

The food composition is preferably a preserved food composition. The food composition may comprise NaCl. NaCl can be present in an amount of from 0 wt% to 100 wt%, preferably of from 0.1 to 35 wt%, or from 0.5 to 20 wt%, or from 1 wt% to 10 wt% based on the weight of the water content of the food composition. It can be present in an amount of from 2 wt% to 5 wt% based on the weight of the water content of the food composition. The present invention showed in particular advantageous for concentrate food compositions. In particular for a food composition wherein the salt level of the food composition is from 10 wt% to 40 wt%, more preferably of from 15 wt% to 30 wt%, most preferably from 20 wt% to 27 wt%, based on the weight of the water content of the food composition, which levels can be preferred in the present food composition. The food composition might contain one or more preserving agents preventing spoilage of the food product, thereby increasing its shelf life. The preserving agent might be selected from the group consisting of mustard, mustard oil, sorbic acid, benzoic acid, formic acid, acetic acid, propionic acid, as well as their alkali and earth alkali metal salts and mixtures thereof. The preserving agent might, alternatively or additionally, be selected form the group consisting of alkali and earth alkali salts of nitrites, nitrates, sulfates and sulphites. The food composition might contain acid as acidity regulator. Preferably the food composition comprises an acid selected from the group consisting of acetic acid, lactic acid, citric acid, bisulfate, phosphoric acid, hydrochloric acid, malic acid, tartaric acid and their alkali and earth alkali salts. The pH of the preserved food composition is preferably of between 8 and 2.5, more preferably between 6 and 3.

Preferably, the food composition is one of the group consisting of margarine spread, salad dressing, sauce, seasoning, soup concentrate, sauce concentrate, seasoning concentrate, bouillon concentrate, roux. More preferably the food composition is selected from the group consisting of soup concentrate, sauce, sauce concentrate, seasoning concentrate, bouillon concentrate. Most preferably, the food composition is in the form of a solid, preferably a gel, or a paste, which is shape-stable at 20 °C, and selected from a soup concentrate, sauce, sauce concentrate, seasoning concentrate, bouillon concentrate.

As indicated, the food composition is not cheese, e.g. it is not preferred that the food composition is a single piece of cheese in absence of other ingredients. It is however possible that the food composition comprises cheese. This might be the case for example if the food composition is or comprises a cheese sauce or a concentrate for a cheese sauce. If cheese is present, it might be preferred that the food composition comprises cheese in an amount of from 0 to 80 wt%, more preferably of from 0.1 to 50 wt%, even more preferably in an amount of from 0.1 to 49 wt%, even more preferably in an amount of 1 to 49 wt%, based on the weight of the food composition. Preferably, the concentration of milk protein, if present in the food composition, is below 40%, based on the weight of the food composition. Preferably, the concentration of milk fat present in the food composition is below 40%, based on the weight of the food composition.

The food composition suitably comprises water. The food composition is preferably a water-continuous food composition. Water is preferably present in an amount of from 10 to 90 wt%, more preferably in an amount of from 20 to 80 wt%, even more preferably in an amount of from 30 to 70 wt% based on the weight of the food composition.

It can be preferred that the amount of fat in the food composition is less than 50%, preferably less than 20 wt%. It is more preferred that the amount of solid (at 20°C) fat in the food composition is less than 50%, preferably less than 40 wt%, in case the food composition is a food composition which has not a paste texture.

In a preferred case, the present invention relates to a food composition, wherein a layer is present at the surface of the food composition, wherein the layer comprises fungus and a water-soluble biopolymer and wherein fat is present between the food composition and the layer,
wherein the fat has a melting point of higher than 25°C,
wherein the fungus comprises fungus selected from *Penicillium camembertii, Penicillium roquefortii, Aspergillus oryzae* and mixtures thereof,
wherein the food composition comprises water in an amount of from 20 to 80 wt%, wherein the food composition comprises salt in an amount of from 10 to 40 wt%, based on the weight of the water content of the food composition,
and wherein the food composition is a sauce; a dressing; a food composition for preparing one or more of a dressing, a bouillon, a soup, a sauce, and gravy; a food composition for use as a seasoning; or a margarine spread.

### Process

In a further aspect, the present invention relates to a process for preparing a food composition according to the invention, the process comprising the steps of:
A) Providing a food composition,
B) Applying a layer onto the food composition resulting from step A), which layer comprises
   - a water-soluble biopolymer and
   - fungus and/or fungal spores,
C) Incubating the layer before or after applying it to the food composition.

In a first step A) a food composition is provided. As discussed above, the food composition is preferably a gel, or a paste. It also can be a viscous liquid. It is within the skill of the artisan to prepare a food composition which has such a texture. It might be preferred, that the food composition is a concentrate food composition. In that case, preferably NaCl is added during preparation of the food composition. NaCl is preferably added in an amount of from 10 wt% to 40 wt%, more preferably of from 15 wt% to 30 wt%, most preferably from 20 wt% to 27 wt%, based on the weight of the water content of the resulting food composition.

In step B) a layer comprising biopolymer and fungus and/or fungal spores is applied to the food composition resulting from step A). Biopolymers are preferably water-soluble biopolymers. Preferred biopolymers have been described above. Application of the layer of biopolymer is done as known in the art, and can be carried out such as exemplified in Examples 1 and 2. Basically this is done by preparing a suspension (suitably in water) comprising fungus and/or fungal spores and preparing an aqueous solution comprising water, a water-soluble biopolymer and nutrients for the fungus, allowing dissolution of the biopolymer and the nutrients. The aqueous solution comprising biopolymer will be cooled to a temperature below the survival threshold of the fungus, which may depend on the fungus species, as known to the skilled person, but preferably to a temperature of lower than 35°C, and the resulting solution mixed with the suspension of fungus and/or fungal spores. Alternatively, the suspension of fungus and/or fungal spores can be added to the layer of biopolymer after the layer was combined with the food composition, for example by spraying the suspension of fungus and/or fungal spores on the food composition comprising a biopolymer layer or dipping this food composition comprising the biopolymer layer in the suspension comprising fungus and/or fungus spores. It is preferred that the layer comprising fungus or fungal spores is applied around the entire food composition.
In case the food composition is liquid, it can be preferred that application of the layer comprises bringing the food composition into layer, for example by pouring, as is understood by the skilled person, which layer may be pre-shaped. In that case, it is preferred that the layer comprising fungus is preferably grown separated from the food composition.

In step C, the layer is incubated. Incubation allows the growth and development of the fungus in and on the biopolymer layer. Incubation is done as known in the art. The layer is incubated before or after applying it to the food composition. In case the layer is incubated after application to the food composition, it is incubated in combination with food composition, as the skilled person will understand. It might be preferred, that the layer comprising fungus (and/or fungal spores) is prepared separately from the food composition. The layer is then incubated before application to the food composition. To this end, the fungus and/or fungal spores are cultured on a layer of biopolymer. Preferably, the biopolymer solution comprising nutrients for the fungus can be provided on a (preferably flat) surface and inoculated with fungal spores before or after applying on the surface. After an incubation period, a layer comprising biopolymer and fungus is formed. For *P. camemberti,* this incubation period is normally about 1-2 weeks. The resulting layer is then separated from the culture surface and transferred to the food composition. This approach has the advantage that the food composition does not need to be present in an incubation process, which can be advantageous for the taste and quality of the food composition. In addition, it appeared that the fungus was less sensitive to influences from the food composition, such as for example salt and preservatives. Surprisingly, the biopolymer layer comprising fungus, prepared separate from the food composition, allowed hot-filling of the packaging material with for example a liquid product. Hot-filling is preferably carried out up to a temperature of the food composition of below 100°C, preferably of below 90°C, which illustrates the flexibility of the packaging material.

The specific time and temperature for incubation might depend for example on the specific fungal species. This can be checked by the skilled person by checking the optimal growth conditions (temperature and humidity) of the chosen fungus species and by simply allowing growth and development of the fungus up to the time it is considered sufficiently dense and ripened for the desired product. Suitably, the incubation is carried out at a temperature of between 15°C and 40°C, preferably of between 20°C and 37°C. Especially if the layer comprises *P. camemberti,* the incubation temperature is preferably of between 23°C and 27°C. If the layer comprises *A. oryzae* the incubation temperature is preferably of between 32°C and 37°C. In some cases it might be preferred that the layer is incubated after application to the food composition. If, in such a case, fat is present between the food composition and the layer, the preferred incubation temperature is below the melting temperature of the fat used. It might be preferred of between 10 and 40°C, preferably of between 15 and 37°C.

The method preferably comprises a step of applying fat to the surface of the food composition. This step is carried out before or during, preferably before, step C. It is preferred, that fat is applied to the surface of the food composition, as a layer of fat. Preferably, the fat and the layer are applied to one surface, but both to the same surface of the food composition, preferably the top surface. More preferably, the fat and the layer are applied at the entire surface of the food composition. In this way, the surface of the food composition is covered by a fat layer and a layer comprising biopolymer and fungus. Preferably all surfaces (e.g. top, bottom and side surfaces) of the food composition are covered with the fat and the layer. Application of fat to the surface of the food composition can be carried out by the skilled artisan as known. For example, fat can be applied to the surface of the food composition by dipping the food composition in liquid fat, preferably melted fat, or by spraying liquid fat on the food composition. Extrusion, for example co-extrusion, or (injection) molding can be other ways, as known in the art.
Also, the fat layer can be pre-formed and filled with the food composition, especially when the food composition is not shape-stable. Preferably after the fat has solidified, the layer comprising biopolymer and fungus is applied. It can be preferred that the step of applying fat comprises cooling after application of the fat. This makes solidification of the fat more efficient. It may also be preferred that the food composition is prepared and cooled below the melting temperature of the fat before the fat is applied.

In a further aspect, the invention relates to a food composition which is obtainable, preferably which is obtained by the process of the present invention.

In a further aspect, the present invention relates to the use of a food composition according to the invention for preparing a dressing, bouillon, a soup, a sauce, a gravy or a seasoned dish. The layer comprising biopolymer and fungus is easily removed by the consumer. This can be done for example by tearing apart the layer with his or her fingers after which the layer can be pushed or peeled off from the surface of the food composition. For edible fungi, these are known to the person skilled in the art, the food composition may be used while the layer with fungus is still present, this can be done for example, in case the food composition is used as a condiment for preparing a soup, a bouillon, a sauce or for seasoning a dish. When the product including the layer, is mixed into a dish or sauce or soup, the consumer may or may not want to remove the layer or its remnants at a later stage, or allow dispersing the layer in the dish. To this end the use can further comprise adding the food composition comprising the layer to a liquid, preferably water, optionally after removing the layer from the food composition. In addition, the use can comprise heating the liquid comprising the food composition, preferably up to a temperature of at least 80°C and preferably lower than 100 °C.

The invention further relates to the use of a layer comprising fungus and a biopolymer as a packaging material on a food composition.

### Advantages

The present invention provides an alternative packaging material for a food composition such as margarine spread, salad dressing, soup concentrate, sauce, sauce concentrate, seasoning concentrate, bouillon concentrate, roux, which packaging is environmentally more sustainable. The packaging material is easy to remove and can be compatible with concentrate food compositions with a high salt level. The packaging may reduce fat-staining on a possible card-board or paper present as further packaging layers. The packaging appeared to be flexible, elastic and to contribute to the physical stability of the food product. The packaging offers protection against spoilage organisms, to an extent similar to that of an aluminized seal. The fungus being part of the packaging material may inhibit the spoilage organisms already available inside the product. The packaging is of natural origin, and offers a positive contribution to the environmental sustainability of the product. If desired, the packaging material can be designed to be eaten with the food composition or be dissolved in the dish during cooking.

The present invention will now be exemplified by the following examples:

### Examples

### Example 1: Growth of a food-grade mould on a gel

In this experiment the relevance of a biopolymer layer is shown. The layer can be easily removed from the food composition.

### Experiment 1 A: P. camemberti is grown in a layer placed on top of a shape stable gel.

### Spore suspensions

### Penicillium camemberti, Aspergillus oryzae

The fungi were grown in colonies on agar plates, under spore-forming conditions. The agar plates were prepared as known in the art, and comprised the following ingredients: 0.5% peptone, 0.25% yeast extract, 0.1% glucose, 1.5% agar. A stock solution of *P. camamberti* CBS 132.62 or *A*. *oryzae* AS3.3482, respectively, was streaked out on the agar as known in the art., and the inoculated agar plate was allowed to incubate at 25°C in a cultivation stove, to allow growth of colonies of the respective organisms. After at least 7 days after formation of a number of visible colonies, spores were harvested from the colonies by rinsing the agar plate 2-3 times with distilled water containing 0.1 % Tween 80 using a sterile pipette. The spore density of the resulting spore-suspension was adjusted by counting using a Petroff-Hauser counting chamber and dilution with distilled water to comprise at least 5.5 x 10^2 and less than 1.5. x 10^5 spores/ml. This spore density resulted in suitable growth conditions after mixing with the biopolymer ingredient solution in a ratio of about 1:10, with complete coverage of the biopolymer layer within 2 weeks.

### Biopolymer Layer

| Formulation of Ingredient Solution | Example 1A [weight %] |
|---|---|
| Xanthan Grindsted | 2 |
| Glucose Syrup Cargill C* 28DE, Sweet 01413 | 4 |
| Yeast extract Gistex LS Aggl | 1 |
| Water | 93 |

### Preparation of the biopolymer layer:

1. Ingredient powders (i.e. xanthan gum and yeast extract) and water were weighed.
2. Water was mixed with glucose syrup under stirring until the glucose syrup was completely dissolved
3. The glucose syrup/water was poured into a Thermomix lab reactor (Vorwerk, Germany) vessel
4. A time of 15 min was programmed, during which the Thermomix was set to heat to 90°C while stirring at level 2-3.
5. The ingredient powders were added at the beginning of the heating period
6. After the end of the 15 min program, the Thermomix vessel was brought to a flow cabinet and the solution was poured into a sterile beaker for cooling the solution under sterile conditions.
7. The spore solution of *P. camemberti* was counted and adjusted, applying the methods for counting and dilution mentioned above, yielding a spore density of 2x10⁵ spores/ml. The spore solution of *A*. *oryzae* was counted applying the method counting mentioned above, yielding a spore density of 2x10⁵ spores/ml.
8. After the cooled ingredient solution had reached a temperature of less than 35°C, the ingredient solution was mixed with the spore suspension by stirring with a spoon, in a ratio of 1 ml spore suspension/10 ml layer ingredient solution. The viscosity of the resulting layer material was sufficiently high so that no sedimentation of spores occurred.

### Food composition in the form of a gel

| Formulation | Example 1 [weight %] |
|---|---|
| Xanthan Grindsted | 1.4 |
| LBG 246 | 0.6 |
| Glucose Syrup Cargill C* 28DE, Sweet 01413 | 4 |
| Yeast extract Gistex LS Aggl | 1 |
| Water | 93 |

### Preparation of a food composition in the form of a gel:

1. Ingredient powders (i.e. xanthan gum, locust bean gum and yeast extract) and water were weighed.
2. Water was mixed with glucose syrup under stirring until the glucose syrup was completely dissolved
3. The glucose syrup/water was put into a Thermomix vessel
4. A time of 15 min was programmed, during which the Thermomix was set to heat to 90°C, while stirring at level 2-3.
5. The ingredient powders were added at the beginning of the heating period
6. After the end of the 15 min program, the Thermomix vessel was brought to a flow cabinet and the solution was poured into tubs for cooling under sterile conditions. All resulting products were adjusted to a pure product weight of 27.5 g.
7. After the solution had reached a temperature below 60°C, the solution was gelled and had formed a shape-stable gel at room temperature.

### Incubation with mould

Example 1 A: 4 ml of *P. camemberti-containing* biopolymer layer was added on top of a food composition in the form of a gel using a sterile plastic pipette and the gel with the layer was placed into an incubator set to 25°C.
Comparative Example 1B: 0.4 ml of *P. camemberti* suspension (2x10⁵ spores/ml.) was directly placed onto a food composition in the form of a gel with a sterile pipette (i.e. without the presence of a biopolymer layer). The food composition was then transferred to an incubator set to 25°C.
Example 1C: 4 ml of *A*. *oryzae*-containing biopolymer layer was added on top of a food composition in the form of a gel using a sterile plastic pipette and placed into an incubator set to 35°C.
Comparative Example 1 D: 0.4 ml of *A*. *oryzae* suspension (2x10⁵ spores/ml.) was directly placed onto a food composition in the form of a gel with a sterile pipette (i.e. without the presence of a biopolymer layer). The food composition was then transferred to an incubator set to 25°C.

The humidity during incubation was approximately 75%.

### Results:

Example 1 A: After two weeks, a dense layer of white *P. camemberti* mould had grown on top of the gel. The biopolymer-mould layer provided a packaging material which reduced or prevented drying out of the food composition, and provided protection against colonization by other micro-organisms. The layer containing mould could be easily removed by squeezing it at one corner between the fingers and pulling. The layer containing the mould could be removed completely without damaging the surface of the food composition in the form of a gel.
Comparative example 1B: After two weeks, a dense layer of white *P. camemberti* mould had grown on the gel. The fungus had grown into the food composition. In order to remove the layer completely, a knife or similar cutting device was necessary. Removal of the layer was not possible without damaging the surface of the food composition in the form of a gel. A part of the food composition is wasted when the mould is not supposed to be consumed with the product.
Example 1C: After two weeks, a dense layer of green-brown *A*. *oryzae* mould had grown on top of the food composition in the form of a gel. The biopolymer-mould layer provided a packaging material which reduced or prevents drying out of the food composition, and provided protection against colonization by other micro-organisms. The layer could be easily removed by squeezing it at one corner between the fingers and pulling. The mould could be removed completely without damaging the gel surface.
Comparative example 1 D: After two weeks, a dense layer of green-brown *A*. *oryzae* mould had grown on the food composition. The fungus had grown into the gel. In order to remove the layer completely, a knife or similar cutting device was necessary. Removal of the layer was not possible without damaging the surface of the food composition in the form of a gel. A part of the food composition is wasted when the mould is not supposed to be consumed with the product.

This example showed that a biopolymer comprising mould can be used as an organic packaging alternative.

### Example 2: Growth of a food-grade mould on a gel

Experiment 2A: *P. camemberti* is grown in a layer placed on top of a shape stable gel containing salt. It is shown that the mould growth is influenced by the preservation state of the product and the salt content of the layer

### Spore suspension

A spore suspension of *P. camemberti* was grown and prepared as described in Example 1.

### Biopolymer Layer

| Formulation | Layer |
|---|---|
| Xanthan Grindsted | 1 |
| Glucose Syrup Cargill C* 28DE, Sweet 01413 | 4 |
| Yeast extract Gistex LS Aggl | 1 |
| Salt (NaCl) | 5* |
| Water | 89 |

| | |
|---|---|
| *=5.3% on water | |

### Preparation of the biopolymer layer:

1. Ingredient powders (i.e. xanthan gum, locust bean gum, yeast extract, salt) and water were weighed.
2. Water was mixed with glucose syrup under stirring until the glucose syrup was completely dissolved
3. The glucose syrup/water was put into a Thermomix vessel
4. A time of 15 min was programmed, during which the Thermomix was set to heat to 90°C while stirring at level 2-3.
5. The ingredient powders apart from the salt were added at the beginning of the heating period
6. After the end of the 15 min program, the salt was added and another period of 15 min was programmed during which the Thermomix was kept at 90°C, with stirring at Level 4. At the end of the cycle, the salt was completely dissolved.
7. The Thermomix vessel was then emptied into a beaker under sterile conditions in a flow cabinet.
8. The spore suspension of *P. camemberti* was counted and adjusted applying the methods described in Example 1, yielding a spore density of 2x10⁵ spores/ml.
9. After the ingredient solution had reached a temperature of less than 35°C, the ingredient solution was mixed with the spore suspension by stirring with a spoon, in a ratio of 1 ml spore suspension/10 ml layer ingredient solution. The viscosity of the resulting layer material was sufficiently high so that no sedimentation of spores occurred.

### Food compositions in the form of a gel

| Formulation | Gel A [weight %] | Gel B | Gel C | Gel D | Gel E, G | Gel F, H |
|---|---|---|---|---|---|---|
| Xanthan Grindsted | 1.4 | 1.4 | 1.4 | 1.4 | 1.4 | 1.4 |
| LBG 246 | 0.6 | 0.6 | 0.6 | 0.6 | 0.6 | 0.6 |
| Glucose Syrup Cargill C* 28DE, Sweet 01413 | 4 | 4 | 4 | 4 | 4 | 4 |
| Yeast extract Gistex LS Aggl | 1 | 1 | 1 | 1 | 1 | 1 |
| Salt (NaCl) | 5 | 10 | 15 | 20 | 25 | 10 |
| Water | 88 | 83 | 78 | 73 | 68 | 83 |
| Citric acid | | | | | | To set pH to 3 |
| Total | 100 | 100 | 100 | 100 | 100 | 100 |
| %Salt on water phase:, calculated as salt/(salt + water) | 5.4 | 10.75 | 16.12 | 21.5 | 26.88 | 10.75 |

### Preparation of the food compositions in the form of a gel:

1. Ingredient powders (i.e. Xanthan, LBG and yeast extract) and water were weighed.
2. Water was mixed with glucose syrup under stirring until the glucose syrup was completely dissolved
3. The glucose syrup/water was put into a Thermomix vessel
4. A time of 15 min was programmed, during which the Thermomix was set to heat to 90°C while stirring at level 2-3.
5. The ingredient powders apart from the salt were added at the beginning of the heating period
6. After the end of the 15 min program, the salt was added and another period of 15 min was programmed during which the Thermomix was kept at 90°C, with stirring at Level 4. At the end of the cycle, the salt was completely dissolved.
7. After the end of the 15 min program, the Thermomix vessel was brought to a flow cabinet and the solution poured into tubs for cooling under sterile conditions. For Experiment 4F, the pH of the gel solution was adjusted to pH 3 after cooling, using citric acid. All resulting products were adjusted to a pure product weight of 27.5 g.
8. After the solution had reached a temperature of below 60°C, the solution gelled and had formed a shape-stable gel at room temperature.

### Incubation with mould

Examples 2A-F: 4 ml of *P. camemberti* -containing biopolymer layer was added on top of a food composition in the form of a gel using a sterile plastic pipette and the gel with layer was placed in an incubator set to 25°C and incubated for 2 weeks to enable growth of the mould.
Example 2G: 2 ml of liquid beef fat was pipetted onto the a food composition in the form of a gel identical to gel E. When the fat had solidified, 4 ml of spore-containing layer was added on top of the solidified beef fat and the gel with layers was placed in an environmental chamber for 2 weeks to enable growth of the mould.
Example 2H: 2 ml of liquid beef fat was pipetted onto a food composition in the form of a gel identical to F. When the fat had solidified, 4 ml of mould- containing layer was added on top of the solidified fat and the gel with layers was placed in an incubator for 2 weeks to enable growth of the mould.

### Results:

Example 2A-2C: After two weeks, a dense layer of white mould had grown on top of the gel. The mould-containing biopolymer layer could be easily removed by squeezing it at one corner between the fingers and pulling. The mould-containing biopolymer layer could be removed completely without damaging the gel surface.
Example 2D-F: After two weeks, no growth of the mould was observed.
Example 2G-H: After two weeks, a dense layer of white mould had grown on top of the gel. The mould-containing biopolymer layer could be easily removed by squeezing it at one corner between the fingers and pulling. The mould can be removed completely without damaging the gel surface.

### Example 3: Preservation action of a food-grade mould on a gel

Example 3 shows that the layer comprising fungus protects the food composition from microbiological contamination.
Experiment 3A: *P. camemberti* was grown in a biopolymer layer placed on top of a food composition in the form of a shape stable gel, preserving the gel against bacteria.
Experiment 3B: *A*. *oryzae* was grown in a layer placed on top of a food composition in the form of a shape stable gel, preserving the gel against bacteria.

### Spore suspension

Spore suspensions of *P. camemberti* and *A*. *oryzae* were grown and prepared as specified in Example 1.

### Biopolymer Layer

The preparation of the layer ingredient solution and its mixing with the spore suspension were conducted as specified in Example 1.

### Food composition in the form of a gel

| Formulation | Example 1 [weight %] |
|---|---|
| Xanthan Grindsted | 0.54 |
| LBG 246 | 0.23 |
| Glucose Syrup Cargill C* 28DE, Sweet | 4 |
| 01413 | |
| Yeast extract Gistex LS Aggl | 1 |
| Salt (NaCl) | 10 |
| Water | 83.23 |

### Preparation of the gel:

1. Ingredient powders (i.e. Xanthan, LBG, yeast extract, salt) and water were weighed.
2. Water was mixed with glucose syrup under stirring until the glucose syrup is completely dissolved
3. The glucose syrup/water was put into a Thermomix vessel
4. A time of 15 min was programmed, during which the Thermomix was set to heat to 90 °C while stirring at level 2-3.
5. The ingredient powders apart from the salt were added at the beginning of the heating period
6. After the end of the 15 min program, the salt was added and another period of 15 min was programmed during which the Thermomix was kept at 90°C, with stirring set to Level 4. At the end of the cycle, the salt was completely dissolved.
7. After the end of the second program, the Thermomix vessel was transferred to a flow cabinet and the solution was poured into tubs for cooling under sterile conditions. All resulting products were adjusted to a pure product weight of 27.5 g.
8. After the solution had reached a temperature below 60°C, the solution gelled and resulted in a shape-stable gel at room temperature.

### Incubation with mould

Example 3A: 4 ml of biopolymer layer containing the mould *P. camemberti was* added on top of the food composition in the form of a gel. The tub containing the gel with layer was placed into an incubator set to 25 °C and kept there for 2 weeks to allow mould growth.
Example 3B: 4 ml of layer containing the mould *A*. *oryzae* was added on top of the gel. The tub containing the gel with layer is placed into an incubator set to 35°C and kept there for 2 weeks to allow mould growth.
Comparative example 3C: 0.4 ml of *P. camemberti* spore suspension was sprayed directly on top of the gel. The tub containing the gel with layer was placed into an incubator set to 25°C and kept there for 2 weeks to allow mould growth.
Comparative example 3D: 0.4 ml of *A*. *oryzae* spore suspension was sprayed directly on top of the gel. The tub containing the gel with layer was placed into an incubator set to 35°C and kept there for 2 weeks to allow mould growth.
Comparative example 3E: No mould and no layer was added to the gel. The tub containing the gel was placed into an incubator set to 25°C and kept there for 2 weeks.
Comparative example 3F: No mould and no layer was added to the gel. The tub containing the gel was placed into an incubator set to 35°C and kept there for 2 weeks.

### Counting of bacteria

Each jelly, including the *P. camemberti* or *A*. *oryzae* layer, was placed individually in a sterile stomacher bag. Phosphate buffered saline (NaCl 8.01 g/l, Na₂HPO₄ • 2 H₂O 1.78 g/l, KH₂PO4 0.27 g/l, pH 7.4) was added to give a 10 fold dilution in weight/weight and the material homogenized by treatment for 30 sec at 230 rpm in a stomacher 400 circulator (Seward ltd.). Ten fold dilutions were made in PBS and 0.2 ml plated onto PCA agar plates. PCA agar is know in the art; the recipe is 0.5% peptone, 0.25% yeast extract, 0.1 % glucose, 1.5% agar. The plates were incubated at 32°C, a temperature which allows the growth of most bacteria but inhibits the growth of *P*. *camemberti.* For material containing *A*. *oryzae,* the PCA agar plates contained 20 microgram/ml natamycin.

### Results:

Examples 3A, 3B, Comparative Examples 3C. 3D: The bacterial count in the food composition in the form of a gel was less than 10 bacteria/g jelly. The food composition in the form of a gel was thus not contaminated.

Comparative example 3E, 3F: The bacterial count was 7 x 10^5 bacteria/g jelly. The food composition in the form of a gel was contaminated with bacteria.

### Example 4: Growth of a food-grade mould into a sheet, followed by transfer to a preserved food product

### Spore suspension

A spore suspension of *P. camemberti was* grown and prepared as described in Example 1. A spore suspension of *A*. *oryzae* was grown and prepared as described in Example 1.

### Biopolymer layer solution:

The preparation of the biopolymer layer ingredient solution and its mixing with the spore suspension were conducted as specified in Example 1.

### Sheet preparation

35 ml of the biopolymer layer solution containing the mould spores was poured into a square petri dish of 10 cm width and grown for 2 weeks in a culture stove to form a confluent sheet-like layer on top of the biopolymer solution. The growth conditions applied were optimum for each mould species (i.e. 25°C for *P. camemberti* and 35°C for *A*. *oryzae,* each at ∼ 75% humidity).

**Food composition in the form of a bouillon gel, seasoning paste, margarine, mayonnaise and crème fraiche.**

### Preparation of a primary package

The mould sheet was removed from the petri dish as whole, by pulling on one end. As the xanthan layer is not a gel, any superfluous biopolymer material was removed from the mould sheet easily, resulting in a layer comprising fungus and a thin biopolymer layer. The mechanical strength of the layer comprising xanthan and fungus against tension is higher than that of the xanthan solution.

### Preparation of the preserved food products

The preserved food products were obtained from a local supermarket. They can be also prepared freshly by persons skilled in the art according to the recipes, involving the mentioned preservatives.

The following products were used:
Example 4A:
   Product description: Bouillon concentrate.
   Texture: gel
   Composition: 48% water, 16% salt (based on weight of the food composition), 10% frozen vegetables, 3% fat, 15% sugar,1.5% thickeners, 6.5% flavor.
Example 4B:
   Product description: seasoning paste
   Texture: paste
   Composition: 31% water, 14% maltodextrin, 10% salt, 7% oil, 10% flavouring powder, 7% vinegar, 4% citrus fiber and thickener, 8% sugar.
Example 4C:
   Product description: margarine
   Texture: solid
   Composition: 50% water, 38% plant oil, 6% yoghurt, 2% modified starch, 1.5% calcium salts, 1% emulsifiers (mono- en diglycerides of fatty acids, sunflower lecithine), 0,3% salt (on total weight of the food composition), 0.5% preservatives (citric acid, potassium sorbate), 0.7% flavours and vitamins.
Example 4D:
   Product description: mayonaise
   Texture: paste-like
   Composition: 72% rapeseed oil, 11.5% water, 6% vinegar, 5% egg yolk, 3.3% sugar, 0.9% salt (based on weight of total composition), 1.3% flavours, antioxidants and xanthan gum together.
Example 4G:
   Product description: Crème fraiche
   Texture: paste
   Composition: 57% water, 20% skimmed milk, 7.5%plant fat, 7.5% hardened plant fat, 6.5% milk powder, 1% modified starch, 0.5% thickeners (pectin, guar), lactic acid.

### Combining sheet with food product

Example 4A: A Bouillon concentrate in form of a gel was removed from its original tub. The mould sheet was placed into a plastic cup (e.g. 4cm diameter). The gel was completely wrapped in the mould sheet and stored at 4°C. After 14 days, the sheet was removed by pulling without damaging the food composition. The food composition was inspected and no major changes in texture (rheological moduli) or color have been identified, compared to a bouillon concentrate preserved by a sealed plastic cup kept at 4°C. The mould sheet (layer comprising biopolymer and fungus) had attached itself and grown together to completely close off the product.
Example 4B: A seasoning paste was removed from a plastic tub. The mould sheet was placed into a plastic cup. The paste was wrapped into the sheet and stored at 25°C in a dry and dark compartment. After 14 days, the sheet was removed by pulling, without damaging the food product. The food product was inspected and no major changes in texture or color indicating worsening of product quality were identified.
Example 4C: 30 g margarine was removed from a large tub with a spoon. The mould sheet was placed into a plastic cup. The margarine was wrapped into the mould sheet and placed into the fridge at 5°C. After 14 days, the sheet was removed by pulling without damaging the food product. The food product was inspected and no major changes in texture or color indicating worsening of product quality were identified.
Example 4D: 30g mayonnaise was removed from a jar. The mould sheet was placed into a plastic cup. The mayonnaise was wrapped completely into the mould sheet and placed into the fridge at 5°C. After 14 days, the sheet was removed by pulling without damaging the food product. The food product was inspected and no major changes in texture or color indicating worsening of product quality were identified. The elastic and viscous moduli of the mayonnaise were quantified with a state-of-the art rheometer (TA AR G2, TA Instruments), according to the following method. The test was performed with the following technical parameters: parallel plate geometry, 1000 µm gap, oscillatory frequency of 1 Hz and 0.1 % strain. The rheometer was cooled to 5°C, the mayonnaise was taken out of the fridge and loaded into the rheometer. The following test program was set:
   (1) A pre-shear was applied with a shear rate of 100/seconds for a duration of 15 seconds. (2) The oscillatory frequency is measured over 20 min.

   The values for G' (elastic modulus) and G" (viscous modulus) at the end of the measurement at 5°C are recorded. The mayonnaise stored in the wrapping showed an elastic modulus (G') of 790 Pa, and a viscous modulus of 123 Pa. For the ratio G'/G", a value of 6.4 was encountered.
Comparative example 4E: A glass of mayonnaise of the same composition as in 4D was stored under the same conditions as the wrapped sheet containing mayonnaise. After 14 days, the glass jar was opened and some mayonnaise was loaded onto the rheometer and measured according to the procedure described in experiment 4D. A modulus G' of 1002 Pa was obtained, and a G" of 136 Pa. A value of 7.4 was encountered. Product 4E is thus similar in texture to product 4D.
Comparative Example 4F: 30g of seasoning paste, identical to the paste used in example 4B, was placed with a spoon into a small tub. The paste is placed into a fridge. After 14 days, the food product was inspected. The paste had dried out. Compared to Experiment 4B, the paste was stored at a lower temperature, in order to prevent the paste from drying and degrading. This indicates the protection provided by the layer according to the invention, despite the higher temperature.
Example 4G: 30g of crème fraiche was scooped from a plastic container. The sheet was placed into a plastic cup. The crème fraiche was placed with a spoon in the middle of a mould sheet. The sheet was carefully wrapped around the crème. The paste-like creme was placed into a fridge for 14 days. After 14 days, the food product was inspected and no major changes indicating worsening of product quality were identified. No loss of liquid due to leaking of syneresis fluid through the packaging was found.

### Example 5: Test of mechanical barrier functions of mould package

Experiment 5 demonstrates and quantifies the barrier functions of sheets of *P*. *camemberti* and *A.oryzae* moulds grown as specified in Example 4.
Experiment 5A. The tensile strength was measured in accordance with the test procedure described in ISO 1924, using a calibrated texture analyzer (Stable Micro Systems TA-AT Plus), with tensile grip clamps. The tensile grips consist of clamps equipped with a vice screw with a knurled jaw, of a diameter of 35 mm. The first clamp was fixed to the bottom plate of the texture analyzer, the other to its sensor head. Test pieces consisted of *P. camemberti* sheets grown as described in Example 4. The sheets were removed from the medium, cleaned from any remaining biopolymer, and cut into pieces of width 15 mm, and a length of at least 90 mm. Each experiment was at least repeated 4 times (4 strips). The thickness of the strips was measured using calipers, and found to be 1.13 mm+/- 0.04 mm. The strips were weighed on an analytical balance (Sartorius), with 0.25 mg precision, and a mean weight 2.25 +/- 0.15 g was obtained, yielding a density of ∼1.47 g/cm^3. The density is thus within that of certain types of paper, used for packaging, with a density up to 1.52 g/cm^3. In order to protect the mould strip from breaking inside the clamp, the ends of the strip were wrapped into a soft paper tissue. The test strips were clamped so that the edges were parallel to the direction of application of the tensile force. The first mould strip was used to obtain a rate of tensile force application which causes the strip to fail at a time between 5 and 20 sec, whereby a force application speed of 1 mm/sec was found to induce failure after ∼ 10 sec. Tests on all further strips were conducted at this force application speed, and applied to 5 strips, yielding the failure time of 12+/-3 sec. For the tensile strength of the *Penicillium camemberti* sheets, a value of 93 N/m +/- 10 N/m was found (average of 5 strips). The film elongation, determined as ratio between the maximum length the strip has immediately before breaking and the initial length, led to a value of 1.13 +/-0.03. For the tensile index, defined by the tensile strength divided by strip weight, a value of 42 N/(m*g) was obtained.
Experiment 5B: The same experiment as described in 5A was conducted for *A. oryzae.* After cutting, the thickness of the strips was found to be 0.15 mm +/- 0.02 mm, based on the average of 4 strips. The thickness is similar to values within a range obtained for paper and tissue paper. A mean weight of 0.285 +/- 0.08 g was obtained, yielding a density of ∼1.40g/cm^3, and a failure time of 8.8 +/- 2.7 s. The tensile strength was 9.36 N/m +/-3 N/m, the film elongation 1.11+/-0.04, and the tensile index 39.3 N/(m*g). Common papers are less elastic and have thus lower elongation..
Experiment 5C: The water vapor transmission rate was measured by a gravimetric technique. A sheet of *P. camemberti* of 3cm x 3cm surface was placed into a holder consisting of two steel plates with a disc-shaped hole that are fixed to each other by 4 screws. The holder is glued to a test tube filled with a desiccant, to establish 0% humidity inside the test tube, the hole (of 15mm diameter) is thus only covered by the mould sheet. The holder is placed into a plastic compartment of constant atmosphere of at least 90% relative humidity, at 25°C. The initial weight of the holder with sheet is recorded, using a balance. The weight measurement is repeated every 24 h, for a duration of at least 1 week. The weight increase of the sheet with time is calculated. For the water vapor transmission rate, a value of 3.0 x 10^-6 kg/(sec*m^2*) was obtained, leading to an estimate of the water vapor permeability of 1.03 x 10^-12 kg/(m*s*Pa).
Experiment 5D: Experiment 5C was repeated with a sheet of *A*. *oryzae* and 2.6 x 10^-6 kg/(sec*m^2*) was obtained for the water vapour transmission rate, and a water vapor permeability of 1.5 x 10^-13 kg/(m *s*Pa).

In general, the mould films showed elasticity higher than that of packaging paper with a typical elasticity of 1.03. A high elasticity at low thickness is preferred for packaging soft materials upon industrial handling might change their shape. Furthermore, it protects better form temperature abuse, when the volume of the food composition might change due to crystallization or freezing. The partially higher tensile strength make them more suitable for packaging soft, wet material than e.g. tissue paper. The water vapor permeability of the mould sheets are in the typical range for edible polymer films, with a lower permeability than maltodextrin, pectin, and starch films, but higher than gluten-based film (∼ 1.5 x higher than the A. oryzae film). In contrast to these films that are often made with the use of plasticizers like glycerol, as well as alcohols, mould films do not contain plasticizers nor do they have to be dried lengthy to evaporate any alcohols before use- mould films are thus environmentally more acceptable.

## Claims

1. A food composition, wherein a layer is present at the surface of the food composition, wherein the layer comprises fungus and a water-soluble biopolymer and wherein the food composition is not cheese.

2. A food composition according to claim 1 or 2, wherein fat is present between the food composition and the layer.

3. Food composition according to any one of the preceding claims, wherein the layer forms the outside of the combination of food composition and layer.

4. Food composition according to any one of the preceding claims, wherein the fat is a fat or fat mixture with a melting point of higher than 20°C.

5. Food composition according to any one of the preceding claims, wherein the fungus comprises one or more species of fungus which belong to a genus or genera selected from the group consisting of *Monascus, Geotrichum, Neurospora, Aspergillus, Penicillium, Actinomucor, Amylomyces, Mucor, Rhizopus, Ustilago.*

6. Food composition according to any one of the preceding claims, wherein the fungus comprises one or more species selected from the group consisting of *M*. *pilosus, M. purpureus, M. ruber, G. candidum, N. sitophila, N. intermedia, A. candidus, A. glaucus, A. melleus, A. niger, A. oryzae, A. repens, A. sojae, P. camemberti, P. candidum, P. glaucum, P. roqueforti, A. taiwanensis, A. elegans var. meitauzae, A. rouxii, M. circinelloides, M. indicus, M. rouxii, R. microspores, R. oligosporus, R. oryzae, U. maydis,* preferably wherein the fungus is selected from *P. Camembertii, P.Roquefortii, A. Oryzae* and mixtures thereof.

7. Food composition according to anyone of the preceding claims, wherein the biopolymer comprises a biopolymer selected from the group consisting of xanthan gum, galactomannan, glucomannan, carrageenan, pectin, alginate, agar, fibers of fruit or vegetable origin, and mixtures thereof.

8. Food composition according to any one of the preceding claims, wherein the food composition is a water-continuous gel or paste and shape-stable at 20°C.

9. Food composition according to any one claims 2 to 8, wherein the food composition comprises salt in an amount of from 10 to 40 wt%, based on the weight of the water content of the food composition.

10. Food composition according to any one of the preceding claims, wherein the food composition is one of the group of margarine spread, salad dressing, soup concentrate, sauce concentrate, seasoning concentrate, bouillon concentrate, sauce, roux.

11. Process for preparing a food composition according to any one of the preceding claims, the process comprising the steps of:
A. Providing a food composition,
B. Applying a layer onto the food composition resulting from step A), which layer comprises:
• a water-soluble biopolymer and
• fungus and/or fungus spores,
C. Incubating the layer before or after applying it to the food composition.

12. Process according to claim 11 further comprising the step of applying fat at the surface of the food composition.

13. Process according to claim 11 or 12, wherein the fat and the layer are applied at the entire surface of the food composition.

14. Process according to any one of claims 11 to 13, wherein the incubation in step C) is carried out at a temperature of between 15 and 40°C.

15. Use of a layer comprising fungus and a water-soluble biopolymer as a packaging material on a food composition, wherein the food composition is not cheese.

## Patentansprüche

1. Nahrungsmittelzusammensetzung, wobei eine Schicht auf der Oberfläche der Nahrungsmittelzusammensetzung vorliegt, wobei die Schicht Pilz und ein wasserlösliches Biopolymer umfasst und wobei die Nahrungsmittelzusammensetzung kein Käse ist.

2. Nahrungsmittelzusammensetzung nach Anspruch 1, wobei zwischen der Nahrungsmittelzusammensetzung und der Schicht Fett vorliegt.

3. Nahrungsmittelzusammensetzung nach irgendeinem der vorhergehenden Ansprüche, wobei die Schicht die Außenseite der Kombination von Lebensmittelzusammensetzung und Schicht bildet.

4. Nahrungsmittelzusammensetzung nach irgendeinem der vorhergehenden Ansprüche, wobei das Fett ein Fett oder eine Fettmischung mit einem Schmelzpunkt von höher als 20°C ist.

5. Nahrungsmittelzusammensetzung nach irgendeinem der vorhergehenden Ansprüche, wobei der Pilz ein oder mehrere Pilz-Arten umfasst, die zu der Gattung oder den Gattungen zählen, die aus der aus Monascus, Geotrichum, Neurospora, Aspergillus, Penicillium, Actinomucor, Amylomyces, Mucor, Rhizopus, Ustilago bestehenden Gruppe ausgewählt sind.

6. Nahrungsmittelzusammensetzung nach irgendeinem der vorhergehenden Ansprüche, wobei der Pilz eine oder mehrere Arten umfasst, die aus der Gruppe ausgewählt sind, die besteht aus M. pilosus, M. purpureus, M. ruber, G. candidum, N. sitophila, N. intermedia, A. candidus, A. glaucus, A. melleus, A. niger, A. oryzae, A. repens, A sojae, P. camemberti, P. candidum, P. glaucum, P. roqueforti, A. taiwanensis, A. elegans var. meitauzae, A. rouxii, M. circinelloides, M. indicus, M. rouxii, R. microspores, R. oligosporus, R. oryzae, U. maydis, wobei der Pilz vorzugsweise aus P. Camembertii, P. Roquefortii, A. Oryzae und Mischungen davon ausgewählt ist.

7. Nahrungsmittelzusammensetzung nach irgendeinem der vorhergehenden Ansprüche, wobei das Biopolymer ein Biopolymer umfasst, das aus der aus Xanthangummi, Galactomannan, Glucomannan, Carrageen, Pektin, Alginat, Agar, Fruchtfasern oder Fasern pflanzlichen Ursprungs und Mischungen davon bestehenden Gruppe ausgewählt ist.

8. Nahrungsmittelzusammensetzung nach irgendeinem der vorhergehenden Ansprüche, wobei die Nahrungsmittelzusammensetzung ein (eine) wasserkontinuierliche(s) Gel oder Paste und bei 20°C formstabil ist.

9. Nahrungsmittelzusammensetzung nach irgendeinem der Ansprüche 2 bis 8, wobei die Nahrungsmittelzusammensetzung Salz in einer Menge von 10 bis 40 Gew.-%, bezogen auf das Gewicht des Wassergehalts der Nahrungsmittelzusammensetzung, umfasst.

10. Nahrungsmittelzusammensetzung nach irgendeinem der vorhergehenden Ansprüche, wobei die Nahrungsmittelzusammensetzung eines der Gruppe aus Margarineaufstrich, Salatdressing, Suppenkonzentrat, Soßenkonzentrat, Würzmittelkonzentrat, Bouillonkonzentrat, Soße und Mehlschwitze ist.

11. Verfahren zur Herstellung einer Nahrungsmittelzusammensetzung nach irgendeinem der vorhergehenden Ansprüche, wobei das Verfahren die Schritte umfasst:
A. Bereitstellen einer Nahrungsmittelzusammensetzung,
B. Auftragen einer Schicht auf die sich aus dem Schritt A) ergebenden Nahrungsmittelzusammensetzung, wobei die Schicht umfasst:
• ein wasserlösliches Biopolymer und
• Pilz und/oder Pilzsporen,
C. Inkubieren der Schicht vor oder nach deren Auftragen auf die Nahrungsmittelzusammensetzung.

12. Verfahren nach Anspruch 11, das des Weiteren den Schritt des Auftragens von Fett auf die Oberfläche der Nahrungsmittelzusammensetzung umfasst.

13. Verfahren nach Anspruch 11 oder 12, wobei das Fett und die Schicht auf die gesamte Oberfläche der Nahrungsmittelzusammensetzung aufgetragen werden.

14. Verfahren nach irgendeinem der Ansprüche 11 bis 13, wobei die Inkubation in Schritt C) bei einer Temperatur zwischen 15 und 40°C durchgeführt wird.

15. Verwendung einer Schicht, die Pilz und ein wasserlösliches Biopolymer enthält, als Verpackungsmaterial auf einer Nahrungsmittelzusammensetzung, wobei die Nahrungsmittelzusammensetzung kein Käse ist.

## Revendications

1. Composition alimentaire, dans laquelle une couche est présente à la surface de la composition alimentaire, dans laquelle la couche comprend un champignon et un biopolymère soluble dans l'eau et dans laquelle la composition alimentaire n'est pas du fromage.

2. Composition alimentaire selon la revendication 1 ou 2, dans laquelle de la graisse est présente entre la composition alimentaire et la couche.

3. Composition alimentaire selon l'une quelconque des revendications précédentes, dans laquelle la couche forme l'extérieur de la combinaison de composition alimentaire et de couche.

4. Composition alimentaire selon l'une quelconque des revendications précédentes, dans laquelle la graisse est une graisse ou un mélange de graisse ayant un point de fusion supérieur à 20° C.

5. Composition alimentaire selon l'une quelconque des revendications précédentes, dans laquelle le champignon comprend une ou plusieurs espèces de champignons qui appartiennent à un genre ou à des genres choisis dans le groupe constitué de *Monascus, Geotrichum, Neurospora, Aspergillus, Penicillium, Actinomucor, Amylomyces, Mucor, Rhizopus, Ustilago.*

6. Composition alimentaire selon l'une quelconque des revendications précédentes, dans laquelle le champignon comprend une ou plusieurs espèces choisies dans le groupe constitué de *M. pilosus, M. purpureus, M. ruber, G. Candidum, N. sitophila, N. intermedia, A. candidus, A. glaucus, A. melleus, A. niger, A. orysae, A. repens, A. sojae, P. camemberti, P. candidum, P. glaucum, P. roqueforti, A. taiwanensis, A. elegans var. meitauzae, A. rouxii, M. circinelloides, M. indicus, M. rouxii, R. microspores, R. oligosporus, R. oryzae, U. maydis,* de préférence dans laquelle le champignon est choisi parmi *P. Camembertii, P. Roquefortii, A. Orizae* et des mélanges de ceux-ci.

7. Composition alimentaire selon l'une quelconque des revendications précédentes, dans laquelle le biopolymère comprend un biopolymère choisi dans le groupe constitué de gomme xanthane, galactomannane, glucomannane, carraghénane, pectine, alginate, agar, fibres de fruit ou d'origine végétale et mélanges de ceux-ci.

8. Composition alimentaire selon l'une quelconque des revendications précédentes, dans laquelle la composition alimentaire est un gel continu dans l'eau ou une pâte et est stable en forme à 20° C.

9. Composition alimentaire selon l'une quelconque des revendications 2 à 8, dans laquelle la composition alimentaire comprend du sel dans une quantité de 10 à 40 % en masse, rapportée à la masse de la teneur en eau de la composition alimentaire.

10. Composition alimentaire selon l'une quelconque des revendications précédentes, dans laquelle la composition alimentaire est une du groupe de pâte à tartiner de margarine, assaisonnement de salade, concentré de soupe, concentré de sauce, concentré d'assaisonnement, concentré de bouillon, sauce, roux.

11. Procédé de préparation d'une composition alimentaire selon l'une quelconque des revendications précédentes, le procédé comprenant les étapes de :
A. fourniture d'une composition alimentaire,
B. application d'une couche sur la composition alimentaire résultant de l'étape A), laquelle couche comprend :
• un biopolymère soluble dans l'eau et
• un champignon et/ou des spores de champignon,
C. incubation de la couche avant ou après application de celle-ci à la composition alimentaire.

12. Procédé selon la revendication 11 comprenant de plus l'étape d'application de graisse à la surface de la composition alimentaire.

13. Procédé selon la revendication 11 ou 12, dans lequel la graisse et la couche sont appliquées sur la surface entière de la composition alimentaire.

14. Procédé selon l'une quelconque des revendications 11 à 13, dans lequel l'incubation dans l'étape C) est réalisée à une température de 15 à 40° C.

15. Utilisation d'une couche comprenant un champignon et un biopolymère soluble dans l'eau comme un matériau d'emballage sur une composition alimentaire, dans laquelle la composition alimentaire n'est pas du fromage.
